# EUROPÄISCHE PATENTANMELDUNG

(11) **EP 4 631 597 A1**
(43) Veröffentlichungstag der Anmeldung: **15.10.2025**
(21) Anmeldenummer: 25167901.5
(22) Anmeldetag: 02.04.2025
(51) Int. Cl.: B01D 33/333, B01D 33/80

(54) **FÖRDERBAND-FILTERVORRICHTUNG UND VERFAHREN ZUR EINSTELLUNG EINER SPANNUNG UND/ODER EINES DURCHHANGS ZUMINDEST EINES GESCHLOSSENEN ZUGMITTELS**

(30) Priorität: 12.04.2024 DE 102024110312
(71) Anmelder: FSM Frankenberger GmbH, 10117 Berlin (DE)
(72) Erfinder: Frankenberger, Guido, 35578 Wetzlar (DE)
(74) Vertreter: advotec.

(57) **Zusammenfassung**

Die Erfindung betrifft eine Förderband-Filtervorrichtung (10), insbesondere Filterbandrechen, zur mechanischen Reinigung einer in einem Kanal strömenden, mit Feststoffen verunreinigten Flüssigkeit, umfassend ein endloses Filterband, ein Rahmengestell sowie eine untere Umlenkeinrichtung (13) und eine obere Umlenkeinrichtung (14), wobei die untere Umlenkeinrichtung und die obere Umlenkeinrichtung an dem Rahmengestell angeordnet sind, wobei das Filterband über die untere Umlenkeinrichtung und die obere Umlenkeinrichtung geführt und längs einer an dem Rahmengestell ausgebildeten Umlaufbahn bewegbar ist, wobei das Filterband zumindest ein geschlossenes Zugmittel, vorzugsweise Kette (16), und eine Mehrzahl von an dem Zugmittel angeordneten Filterelementen umfasst, wobei die Förderband-Filtervorrichtung eine Messeinrichtung (23) mit zumindest einer Messeinheit zur Messung einer Spannung und/oder eines Durchhangs des Zugmittels umfasst.

## Beschreibung

Die Erfindung betrifft eine Förderband-Filtervorrichtung, insbesondere Filterbandrechen, zur mechanischen Reinigung einer in einem Kanal strömenden, mit Feststoffen verunreinigten Flüssigkeit, umfassend ein endloses Filterband, ein Rahmengestell sowie eine untere Umlenkeinrichtung und eine obere Umlenkeinrichtung, wobei die untere Umlenkeinrichtung und die obere Umlenkeinrichtung an dem Rahmengestell angeordnet sind, wobei das Filterband über die untere Umlenkeinrichtung und die obere Umlenkeinrichtung geführt und längs einer an dem Rahmengestell ausgebildeten Umlaufbahn bewegbar ist, wobei das Filterband zumindest ein geschlossenes Zugmittel, vorzugsweise Kette, und eine Mehrzahl von an dem Zugmittel angeordneten Filterelementen umfasst. Weiter betrifft die Erfindung ein Verfahren zur Einstellung einer Spannung und/oder eines Durchhangs zumindest eines geschlossenen Zugmittels, vorzugsweise Kette, eines endlosen Filterbands einer Förderband-Filtervorrichtung, insbesondere Filterbandrechen, zur mechanischen Reinigung einer in einem Kanal strömenden, mit Feststoffen verunreinigten Flüssigkeit, mittels einer Einstelleinrichtung der Förderband-Filtervorrichtung, wobei das Filterband über eine untere Umlenkeinrichtung der Förderband-Filtervorrichtung und eine obere Umlenkeinrichtung der Förderband-Filtervorrichtung geführt und längs einer an einem Rahmengestell der Förderband-Filtervorrichtung ausgebildeten Umlaufbahn bewegbar ist, wobei die untere Umlenkeinrichtung und die obere Umlenkeinrichtung an dem Rahmengestell angeordnet sind, wobei das Filterband eine Mehrzahl von an dem Zugmittel angeordneten Filterelementen umfasst.

Eine Förderband-Filtervorrichtung der eingangs genannten Art, welche auch als sogenannter "Paternoster-Filterrechen" bezeichnet wird, ist beispielsweise aus der DE 10 2013 212 081 A1 bekannt und dient vor allem zur mechanischen Reinigung eines strömenden Abwassers in einem Kanal. Filterelemente eines endlosen Filterbands der Förderband-Filtervorrichtung werden von dem Abwasser quer oder auch in einer Längsrichtung der Filterelemente durchströmt und tragen ein Filtergut, welches die Filterelemente nicht passieren kann, aus dem Kanal aus. Das Filterband ist über eine untere Umlenkeinrichtung der Förderband-Filtervorrichtung und eine obere Umlenkeinrichtung der Förderband-Filtervorrichtung geführt und längs einer an einem Rahmengestell der Förderband-Filtervorrichtung, an welchem die untere Umlenkeinrichtung und die obere Umlenkeinrichtung angeordnet sind, ausgebildeten Umlaufbahn bewegbar. Im Bereich der oberen Umlenkeinrichtung, welche oberhalb eines Abwasserspiegels angeordnet ist, ist üblicherweise eine, in der Regel als eine rotierende Bürste ausgeführte, Abstreifeinrichtung der Förderband-Filtervorrichtung vorgesehen, die in einem Abstreifvorgang an den Filterelementen anhaftendes Filtergut von den Filterelementen entfernt, sodass das Filtergut mittels einer Abwurfeinrichtung der Förderband-Filtervorrichtung abgeworfen werden kann.

Die Filterelemente sind an zumindest einem geschlossenen Zugmittel des Filterbands angeordnet. Das Zugmittel ist in der Regel als eine Kette ausgebildet und über zumindest ein Kettenrad der unteren Umlenkeinrichtung und zumindest ein Kettenrad der oberen Umlenkeinrichtung geführt. Die Kettenräder und die Kette bilden einen Kettentrieb aus. Das Kettenrad der unteren Umlenkeinrichtung ist an einer Umlenkwelle der unteren Umlenkeinrichtung und das Kettenrad der oberen Umlenkeinrichtung ist an einer Umlenkwelle der oberen Umlenkeinrichtung angeordnet. Mittels einer zum Antreiben der Umlenkwelle der oberen Umlenkeinrichtung vorgesehenen Antriebeinrichtung der Förderband-Filtervorrichtung kann eine Antriebskraft auf das Kettenrad der oberen Umlenkeinrichtung aufgebracht werden, welche über eine Verzahnung des Kettenrads der oberen Umlenkeinrichtung auf Kettenglieder der Kette übertragen werden kann. Aufgrund einer Formschlüssigkeit des Kettentriebs bedarf es zur Übertragung einer erforderlichen Antriebskraft keiner Einstellung einer definierten Spannung der Kette. Trotzdem muss die Spannung, ähnlich wie bei einer Motorradkette, derart eingestellt werden, dass die Kette einen bestimmten Durchhang aufweist. Der Durchhang tritt bei einem Leertrum der Kette in einem Bereich der unteren Umlenkeinrichtung auf. Die Einstellung erfolgt mittels einer Einstelleinrichtung der Förderband-Filtervorrichtung in einem Bereich der oberen Umlenkeinrichtung. Die Einstellung des Durchhangs ist erforderlich, damit die Kette sauber läuft und nicht aus dem Kettenrad der unteren Umlenkeinrichtung fällt. Eine Einstellung einer zu geringen Spannung bzw. eines zu großen Durchhangs führt zu einem Schleifen der Filterelemente auf einem Boden des Kanals oder an dem Rahmengestell in dem Bereich der unteren Umlenkeinrichtung. Dieses Schleifen zieht einen erhöhten Verschleiß der Förderband-Filtervorrichtung, insbesondere der Filterelemente, und im schlimmsten Fall gar eine Zerstörung der Filterelemente nach sich. Auch eine Einstellung einer zu großen Spannung führt zu einem erhöhten Verschleiß der Förderband-Filtervorrichtung, insbesondere des Filterbands, der unteren Umlenkeinrichtung, der oberen Umlenkeinrichtung und der Antriebeinrichtung.

Der Bereich der unteren Umlenkeinrichtung, in welchem der Durchhang auftritt, befindet sich in nahezu allen Betriebszuständen der Förderband-Filtervorrichtung unterhalb des Abwasserspiegels bzw. liegt zum Teil bis zu 10 m tief in dem Kanal und ist somit von einem Bedienflur, von dem aus die Einstellung der Spannung bzw. des Durchhangs erfolgt, von einem Bediener nicht einsehbar. Selbst bei einer vergleichsweise geringen Tiefe des Kanals und bei der nicht in das Abwasser eingetauchten unteren Umlenkeinrichtung ist der Bereich der unteren Umlenkeinrichtung in Abhängigkeit eines Einbauwinkels der Förderband-Filtervorrichtung für den Bediener nicht einsehbar. Daher ist es nicht möglich, eine visuelle Kontrolle der Einstellung vorzunehmen. Die Einstellung der Spannung bzw. des Durchhangs erfolgt aus diesem Grund allein anhand von Erfahrungswerten nach Gefühl des Bedieners. Es kommt daher regelmäßig zu einer Einstellung einer zu geringen Spannung bzw. eines zu großen Durchhangs oder einer zu großen Spannung bzw. Überspannung und somit zu einem erhöhten Verschleiß der Förderband-Filtervorrichtung. Infolge eines Polygoneffekts schwankt die Spannung in Abhängigkeit einer Stellung des Kettentriebs. Die Spannung schwankt bzw. oszilliert daher bei einem Betrieb der Förderband-Filtervorrichtung, wobei die Spannung fortlaufend erhöht und vermindert wird. Insbesondere dann, wenn die Einstellung des Durchhangs bei einem Stillstand der Förderband-Filtervorrichtung bei der infolge des Polygoneffekts maximal verminderten Spannung erfolgt, besteht eine Gefahr, dass die Kette bei dem Betrieb infolge des Polygoneffekts, insbesondere bei der maximal erhöhten Spannung, überspannt wird, was einen besonders hohen Verschleiß der Förderband-Filtervorrichtung zur Folge hat.

Der vorliegenden Erfindung liegt daher die Aufgabe zugrunde, eine Förderband-Filtervorrichtung und ein Verfahren vorzuschlagen, welche bzw. welches einen verschleißärmeren Betrieb der Förderband-Filtervorrichtung ermöglicht.

Diese Aufgabe wird durch eine Förderband-Filtervorrichtung mit den Merkmalen des Anspruchs 1 und ein Verfahren mit den Merkmalen des Anspruchs 12 gelöst.

Die erfindungsgemäße Förderband-Filtervorrichtung, insbesondere Filterbandrechen, zur mechanischen Reinigung einer in einem Kanal strömenden, mit Feststoffen verunreinigten Flüssigkeit umfasst ein endloses Filterband, ein Rahmengestell sowie eine untere Umlenkeinrichtung und eine obere Umlenkeinrichtung, wobei die untere Umlenkeinrichtung und die obere Umlenkeinrichtung an dem Rahmengestell angeordnet sind, wobei das Filterband über die untere Umlenkeinrichtung und die obere Umlenkeinrichtung geführt und längs einer an dem Rahmengestell ausgebildeten Umlaufbahn bewegbar ist, wobei das Filterband zumindest ein geschlossenes Zugmittel, vorzugsweise Kette, und eine Mehrzahl von an dem Zugmittel angeordneten Filterelementen umfasst, wobei die Förderband-Filtervorrichtung eine Messeinrichtung mit zumindest einer Messeinheit zur Messung einer Spannung und/oder eines Durchhangs des Zugmittels, vorzugsweise in einem Bereich der unteren Umlenkeinrichtung, umfasst.

Erfindungsgemäß umfasst die Förderband-Filtervorrichtung, insbesondere Filterbandrechen, zur mechanischen Reinigung einer in einem Kanal strömenden, mit Feststoffen verunreinigten Flüssigkeit ein endloses Filterband, ein Rahmengestell sowie eine untere Umlenkeinrichtung und eine obere Umlenkeinrichtung, wobei die untere Umlenkeinrichtung und die obere Umlenkeinrichtung an dem Rahmengestell angeordnet sind, wobei das Filterband über die untere Umlenkeinrichtung und die obere Umlenkeinrichtung geführt und längs einer an dem Rahmengestell ausgebildeten Umlaufbahn bewegbar ist, wobei das Filterband zumindest ein geschlossenes Zugmittel, vorzugsweise Kette, und eine Mehrzahl von an dem Zugmittel angeordneten Filterelementen umfasst. Die Förderband-Filtervorrichtung kann zur mechanischen Reinigung eines strömenden Abwassers in einem Kanal dienen. Dabei können die Filterelemente von dem Abwasser quer oder auch in einer Längsrichtung der Filterelemente durchströmt werden und ein Filtergut, welches die Filterelemente nicht passieren kann, aus dem Kanal austragen. Die Filterelemente sind dabei an dem Zugmittel befestigt. Vorzugsweise kann das Filterband zwei Zugmittel umfassen. Die Filterelemente können dann jeweils mit einem ersten Ende der Filterelemente an einem ersten Zugmittel und mit einem zweiten Ende der Filterelemente an einem zweiten Zugmittel befestigt sein, so dass die Filterelemente zwischen den Zugmitteln angeordnet sein können. Die Filterelemente können in Gestalt von Sieben oder Harken ausgebildet sein. Die untere Umlenkeinrichtung und die obere Umlenkeinrichtung können jeweils eine Umlenkwelle und zumindest ein an der jeweiligen Umlenkwelle angeordnetes Rad umfassen. Die Räder und das Zugmittel können einen Zugmitteltrieb ausbilden. Vorzugsweise kann das Zugmittel als eine Kette ausgebildet sein. Die Räder können als Kettenräder ausgebildet sein. Die Kettenräder und die Kette können einen Kettentrieb ausbilden. Die Kette kann aus Kettengliedern zusammengesetzt sein. Die Kette kann beispielsweise eine Rollenkette sein. Die Kettenglieder können dann neben äußeren und inneren Laschen Rollen bzw. Buchsen aufweisen. Die Rollen können zwischen den inneren Laschen angeordnet sein. Die untere Umlenkeinrichtung kann anstelle der Umlenkwelle und des an der Umlenkwelle angeordneten Rads auch eine starre Führungsbahn umfassen.

Erfindungsgemäß umfasst die Förderband-Filtervorrichtung eine Messeinrichtung mit zumindest einer Messeinheit zur Messung einer Spannung und/oder eines Durchhangs des Zugmittels. Das Vorsehen der Messeinrichtung bzw. der Messeinheit ermöglicht es, die Spannung bzw. den Durchhang messen zu können. Die Messbarkeit der Spannung bzw. des Durchhangs ermöglicht wiederum eine kontrollierte Einstellung der Spannung bzw. des Durchhangs vornehmen zu können, wodurch wiederum ein verschleißärmerer Betrieb der Förderband-Filtervorrichtung ermöglicht wird. Wenn das Filterband zwei oder mehr Zugmittel umfasst, kann nur eine Messeinheit für ein einziges Zugmittel vorgesehen sein. Es kann jedoch auch je Zugmittel eine eigene Messeinheit vorgesehen sein. Die Messeinheit kann als eine mechanische Messeinheit oder eine elektrische Messeinheit ausgebildet sein.

In einer bevorzugten Ausführungsform der Förderband-Filtervorrichtung kann mittels der Messeinheit die Spannung und/oder der Durchhang eines Leertrums des Zugmittels in einem Bereich der unteren Umlenkeinrichtung messbar sein, da der Durchhang bei einer bei einem Betrieb der Förderband-Filtervorrichtung betrachtet abwärtslaufenden Seite des Zugmittels in dem Bereich der unteren Umlenkeinrichtung auftritt. Die Spannung und/oder der Durchhang des Zugmittels bzw. Leertrums kann dann mittels der Messeinheit in einer Umlaufrichtung des Filterbands bzw. des Zugmittels betrachtet vor der unteren Umlenkeinrichtung und benachbart der unteren Umlenkeinrichtung messbar sein.

In einer bevorzugten Ausführungsform der Förderband-Filtervorrichtung kann das Förderband zwei Ketten umfassen, welche jeweils aus Kettengliedern zusammengesetzt sein können, wobei die Filterelemente jeweils zwischen zwei Kettengliedern der Ketten angeordnet sein können. Die Filterelemente können dann jeweils mit dem ersten Ende an einem jeweiligen Kettenglied einer ersten Kette und mit dem zweiten Ende an einem jeweiligen Kettenglied einer zweiten Kette zwischen den beiden Kettengliedern angeordnet seiend befestigt sein.

In einer bevorzugten Ausführungsform der Förderband-Filtervorrichtung kann die Messeinheit einen bewegbar, vorzugsweise drehbar, an dem Rahmengestell gelagerten Hebel, zumindest ein Andruckelement, insbesondere Federelement und/oder Gewichtselement, und zumindest ein an dem Hebel angeordnetes Abtastelement, insbesondere Rolle und/oder Gleitkufe, umfassen, wobei der Hebel mittels des Andruckelements in Richtung des Filterbands, insbesondere des Zugmittels, gedrückt sein kann, derart, dass das Abtastelement gegen bzw. an das Zugmittel und/oder die Filterelemente gedrückt bzw. andrückbar ist. Das Abtastelement kann zur Abtastung des Zugmittels und/oder der Filterelemente mit einem Teil einer Oberfläche des Abtastelements an dem Zugmittel und/oder den Filterelementen anliegen. Vorzugsweise kann das Abtastelement in dem Bereich der unteren Umlenkeinrichtung gegen das Leertrum gedrückt werden. Vorzugsweise erfolgt eine Abtastung des Zugmittels, da dieses im Gegensatz zu den Filterelementen, nicht direkt in einem Abwasserstrom liegt. Eine Gefahr, dass sich Schmutzstoffe um die Messeinrichtung bzw. Messeinheit wickeln können, ist somit kleiner. Die Rolle kann eine Vertiefung ausbilden, welche zur Ermöglichung eines Passierens der Rollen der Rollenkette dienen kann. Dabei können die Rollen der Rollenkette an einem Grund der Vertiefung anliegen. Vorzugsweise kann die Messeinheit zwei auf einer gemeinsamen Achse der Messeinheit nebeneinander angeordnete Rollen umfassen. Die Rollen können dann gemeinsam eine Vertiefung ausbilden. Die Laschen auf einer Seite der Rollenkette können dann an der einen Rolle und die Laschen auf einer anderen Seite der Rollenkette an der anderen Rolle anliegen. So wird eine optimierte Abtastung bzw. Führung des Zugmittels ermöglicht. Der Hebel kann in Abhängigkeit der Spannung bzw. des Durchhangs bewegbar bzw. drehbar sein, so dass eine Stellung bzw. Auslenkung des Hebels in Abhängigkeit der Spannung bzw. des Durchhangs veränderbar sein kann. Die Stellung bzw. Auslenkung des Hebels kann daher als ein Maß für die Spannung bzw. den Durchhang verwendet werden. Eine derartige Ausbildung der Messeinheit als eine mechanische Messeinheit ist besonders robust sowie schmutzunempfindlich und daher besonders störungssicher, insbesondere im Vergleich zu einer Ausbildung der Messeinheit als eine elektrische Messeinheit mit einem Sensor, welche alternativ zu der mechanischen Messeinheit vorgesehen sein kann.

In einer bevorzugten Ausführungsform der Förderband-Filtervorrichtung kann die Messeinheit ein Gestänge umfassen, welches an den Hebel gekoppelt sein kann. Die Bewegung bzw. Drehung des Hebels kann zu einer Bewegung des mit dem Hebel gekoppelten Gestänges führen. Daher kann eine Stellung des Gestänges, insbesondere eine Position eines nicht an den Hebel gekoppelten Endes des Gestänges, als ein Maß für die Spannung bzw. den Durchhang verwendet werden. Das Gestänge kann einerends an den Hebel gekoppelt sein und andernends bzw. mit dem Ende in einen Bereich oberhalb eines Abwasserspiegels bzw. in einen Bereich der oberen Umlenkeinrichtung bzw. in einen Bereich eines Bedienflurs, von wo aus die Einstellung der Spannung bzw. des Durchhangs durch einen Bediener erfolgen kann, geführt sein, so dass die Stellung des Gestänges bzw. Position des Endes von dem Bediener wahrgenommen werden kann. Das Gestänge kann zumindest eine Stange umfassen. Das Gestänge kann eine einzige Stange oder eine Mehrzahl von, vorzugsweise gelenkig, miteinander gekoppelten Stangen umfassen. Die Stangen können in Reihe angeordnet sein.

In einer alternativen Ausführungsform der Förderband-Filtervorrichtung kann die Messeinheit zumindest einen Sensor, vorzugsweise Näherungssensor bzw. Näherungsinitiator, umfassen. Der Sensor kann an dem Rahmengestell angeordnet sein. Vorzugsweise kann der Sensor die Spannung bzw. den Durchhang des Leertrums in dem Bereich der unteren Umlenkeinrichtung messen. Eine derartige Ausbildung der Messeinheit als eine elektrische Messeinheit ist besonders kompakt, insbesondere im Vergleich zu der mechanischen Messeinheit.

In einer bevorzugten Ausführungsform der Förderband-Filtervorrichtung kann die Messeinrichtung eine Anzeigeeinheit zur Anzeige einer Größe der Spannung und/oder des Durchhangs umfassen. Der Bediener kann die Spannung bzw. den Durchhang unter Beobachtung der angezeigten Größe dann so einstellen, dass sich die Spannung bzw. der Durchhang innerhalb eines Sollbereichs befindet. Infolge eines Polygoneffekts kann die

Spannung bzw. der Durchhang in Abhängigkeit einer Stellung des Zugmitteltriebs schwanken. Die Spannung bzw. der Durchhang kann daher bei einem Betrieb der Förderband-Filtervorrichtung schwanken bzw. oszillieren, wobei die Spannung bzw. der Durchhang fortlaufend erhöht und vermindert werden kann. Vorzugsweise kann die Spannung bzw. der Durchhang so eingestellt werden, dass die Spannung bzw. der Durchhang auch angesichts von den durch den Polygoneffekt bedingten Schwankungen der Spannung bzw. des Durchhangs bei dem Betrieb der Förderband-Filtervorrichtung vollständig innerhalb des Sollbereichs liegt. Die Messeinheit, insbesondere der Sensor der Messeinheit, kann mit der Anzeigeeinheit zusammenwirken, insbesondere verbunden sein.

In einer bevorzugten Ausführungsform der Förderband-Filtervorrichtung kann das Gestänge mit einem ersten Ende des Gestänges an den Hebel gekoppelt sein kann und an einem zweiten Ende des Gestänges einen Zeiger aufweisen, welcher zu einem Zusammenwirken mit einer Skala der Anzeigeeinheit, insbesondere Bereichsskala, eingerichtet sein kann, derart, dass anhand einer Position des Zeigers bezogen auf die Skala die Größe der Spannung und/oder des Durchhangs ablesbar sein kann. Die Anzeigeeinheit kann dann als eine mechanische Anzeigeeinheit ausgebildet sein. Die Bereichsskala kann einen Gutbereich aufweisen. Wenn sich der Zeiger innerhalb des Gutbereichs befindet, kann der Bediener daraus ableiten, dass sich die Spannung bzw. der Durchhang innerhalb eines Sollbereichs befindet. Wenn sich der Zeiger außerhalb des Gutbereichs befindet, kann der Bediener daraus ableiten, dass sich die Spannung bzw. der Durchhang außerhalb des Sollbereichs befindet. Der Bediener kann die Spannung bzw. den Durchhang dann solange verstellen, bis sich der Zeiger innerhalb des Gutbereichs befindet. Weiter kann die Anzeigeeinheit ein Führungsmittel umfassen, mittels welchem das Gestänge bzw. das zweite Ende führbar sein kann. Das Führungsmittel kann als ein Kasten ausgebildet sein, wobei das Gestänge bzw. das zweite Ende in eine Öffnung des Kastens eingreifen kann.

In einer alternativen oder damit kombinierten Ausführungsform der Förderband-Filtervorrichtung kann das Gestänge mit einem bzw. dem ersten Ende des Gestänges an den Hebel gekoppelt sein, wobei das Gestänge ein zweites bzw. das zweite Ende aufweisen kann, wobei die Anzeigeeinheit zumindest einen Sensor umfassen kann, mittels welchem eine Position des zweiten Endes erfassbar sein kann. Mittels des Sensors kann anhand der Position des zweiten Endes festgestellt werden, ob sich die Spannung bzw. der Durchhang in einem Sollbereich befindet. Die Anzeigeeinheit kann dann als eine elektrische Anzeigeeinheit ausgebildet sein. Die Anzeigeeinheit kann ein mit dem Sensor verbundenes Ausgabemittel zur Ausgabe eines optischen und/oder akustischen Signals umfassen, welches den Bediener über die Größe der Spannung bzw. des Durchhangs informieren kann. Das Ausgabemittel kann einen bzw. den Zeiger und eine bzw. die Skala, insbesondere Bereichsskala, aufweisen. Das Ausgabemittel kann einen Bildschirm aufweisen.

In einer bevorzugten Ausführungsform der Förderband-Filtervorrichtung kann die Förderband-Filtervorrichtung eine, vorzugsweise in einem Bereich der oberen Umlenkeinrichtung, angeordnete Einstelleinrichtung zum Einstellen der Spannung und/oder des Durchhangs umfassen.

In einer bevorzugten Ausführungsform der Förderband-Filtervorrichtung kann die Förderband-Filtervorrichtung eine Antriebeinrichtung zum Antreiben einer Umlenkwelle der oberen Umlenkeinrichtung umfassen. Das an der Umlenkwelle der oberen Umlenkeinrichtung angeordnete Rad kann dann ein Antriebsrad und das an der Umlenkwelle der unteren Umlenkeinrichtung angeordnete Rad kann dann ein Abtriebsrad sein. Auf das Antriebsrad kann dann mittels der Antriebeinrichtung eine Antriebskraft aufgebracht werden, welche auf das Zugmittel übertragen werden kann. Die Antriebeinrichtung kann einen Antriebmotor umfassen. Die untere Umlenkeinrichtung kann anstelle der Umlenkwelle und des an der Umlenkwelle angeordneten Rads auch die starre Führungsbahn umfassen.

In einer bevorzugten Ausführungsform der Förderband-Filtervorrichtung kann die Förderband-Filtervorrichtung eine Abwurfeinrichtung zum Abwerfen eines Filterguts umfassen. Die Abwurfeinrichtung kann einen Abwurfkanal aufweisen. Mittels des Abwurfkanals kann das Filtergut dann zu einer der Förderband-Filtervorrichtung nachgeordneten Anlage geführt werden.

In einer bevorzugten Ausführungsform der Förderband-Filtervorrichtung kann die Förderband-Filtervorrichtung eine Abstreifeinrichtung zum Abstreifen der Filterelemente, insbesondere eine rotierende Bürste, umfassen. Ein an den Filterelementen anhaftendes Filtergut kann infolge des Abstreifens von den Filterelementen entfernt werden. Die Abstreifeinrichtung kann einen Antriebmotor umfassen

Weitere vorteilhafte Ausführungsformen der Vorrichtung ergeben sich aus den Merkmalsbeschreibungen der auf den Verfahrensanspruch 12 rückbezogenen Unteransprüche.

Bei dem erfindungsgemäßen Verfahren zur Einstellung einer Spannung und/oder eines Durchhangs zumindest eines geschlossenen Zugmittels eines endlosen Filterbands einer Förderband-Filtervorrichtung, insbesondere Filterbandrechen, zur mechanischen Reinigung einer in einem Kanal strömenden, mit Feststoffen verunreinigten Flüssigkeit, mittels einer Einstelleinrichtung der Förderband-Filtervorrichtung, wobei das Filterband über eine untere Umlenkeinrichtung der Förderband-Filtervorrichtung und eine obere Umlenkeinrichtung der Förderband-Filtervorrichtung geführt und längs einer an einem Rahmengestell der Förderband-Filtervorrichtung ausgebildeten Umlaufbahn bewegbar ist, wobei die untere Umlenkeinrichtung und die obere Umlenkeinrichtung an dem Rahmengestell angeordnet sind, wobei das Filterband eine Mehrzahl von an dem Zugmittel angeordneten Filterelementen umfasst, wird die Spannung und/oder der Durchhang mittels zumindest einer Messeinheit einer Messeinrichtung der Förderband-Filtervorrichtung gemessen. Zu den vorteilhaften Wirkungen des Verfahrens wird auf die Vorteilsbeschreibung der erfindungsgemäßen Vorrichtung verwiesen.

In einer bevorzugten Ausführungsform des Verfahrens kann die Spannung und/oder der Durchhang bei einem Stillstand der Förderband-Filtervorrichtung eingestellt werden. Alternativ kann die Einstellung auch bei einem Betrieb der Förderband-Filtervorrichtung erfolgen. Die Einstellung kann derart erfolgen, dass die Spannung bzw. der Durchhang in einem Sollbereich liegt. Die Einstellung kann beispielsweise mit einem Drehmomentschlüssel durchgeführt werden.

In einer bevorzugten Ausführungsform des Verfahrens kann die Spannung und/oder der Durchhang bei einem Stillstand der Förderband-Filtervorrichtung gemessen werden. Die Messung kann bei der Einstellung erfolgen.

In einer bevorzugten Ausführungsform des Verfahrens kann die Spannung und/oder der Durchhang bei einem Betrieb der Förderband-Filtervorrichtung gemessen werden. So kann eine Größe einer durch den Polygoneffekt bedingten Schwankung der Spannung bzw. des Durchhangs, wobei die Spannung bzw. der Durchhang bei dem Betrieb der Förderband-Filtervorrichtung schwankt bzw. oszilliert, gemessen werden. Ein für die Größe der Schwankung erhaltenes Messergebnis kann zur Präzisierung der Einstellung verwendet werden. Eine Stärke einer Ausprägung des Polygoneffekts wird insbesondere durch eine Anzahl von Zähnen der Kettenräder und/oder eine Länge der Kettenglieder beeinflusst.

In einer bevorzugten Ausführungsform des Verfahrens kann die Einstellung derart erfolgen, dass die Spannung und/oder der Durchhang auch angesichts von durch einen Polygoneffekt bedingten Schwankungen der Spannung und/oder des Durchhangs bei einem Betrieb der Förderband-Filtervorrichtung vollständig innerhalb eines Sollbereichs liegen kann. Die Spannung bzw. der Durchhang kann dann auch angesichts einer maximal erhöhten oder einer maximal verminderten Spannung den Sollbereich nicht verlassen.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine Seitenansicht einer Förderband-Filtervorrichtung;
- **Fig. 2**: eine Vorderansicht der Förderband-Filtervorrichtung,
- **Fig. 3**: eine Schnittansicht der Förderband-Filtervorrichtung entlang einer in der Fig. 2 gezeigten Achse A-A;
- **Fig. 4**: eine vergrößerte Darstellung eines in der Fig. 3 gezeigten Bereichs B;
- **Fig. 5**: eine vergrößerte Darstellung eines in der Fig. 3 gezeigten Bereichs C.

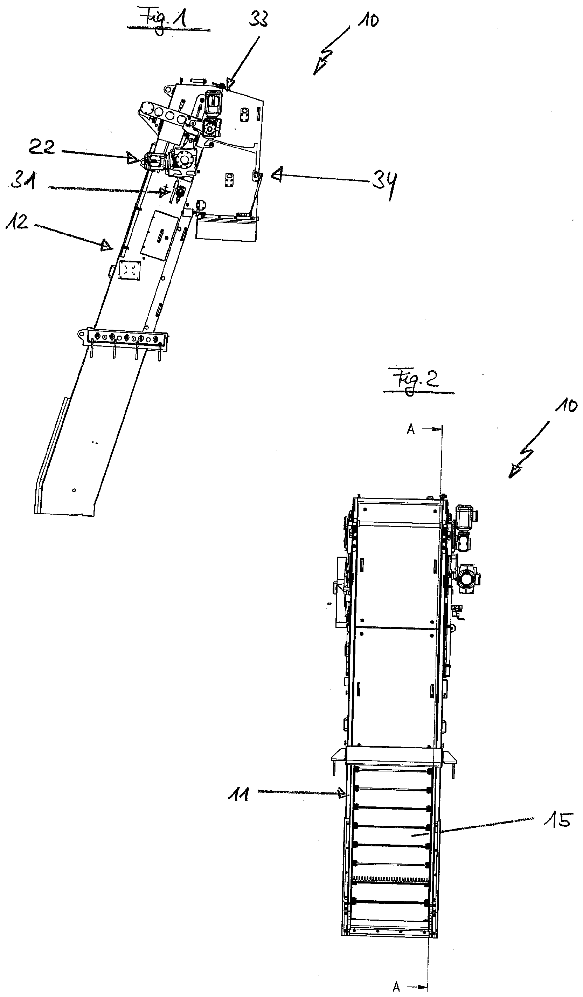

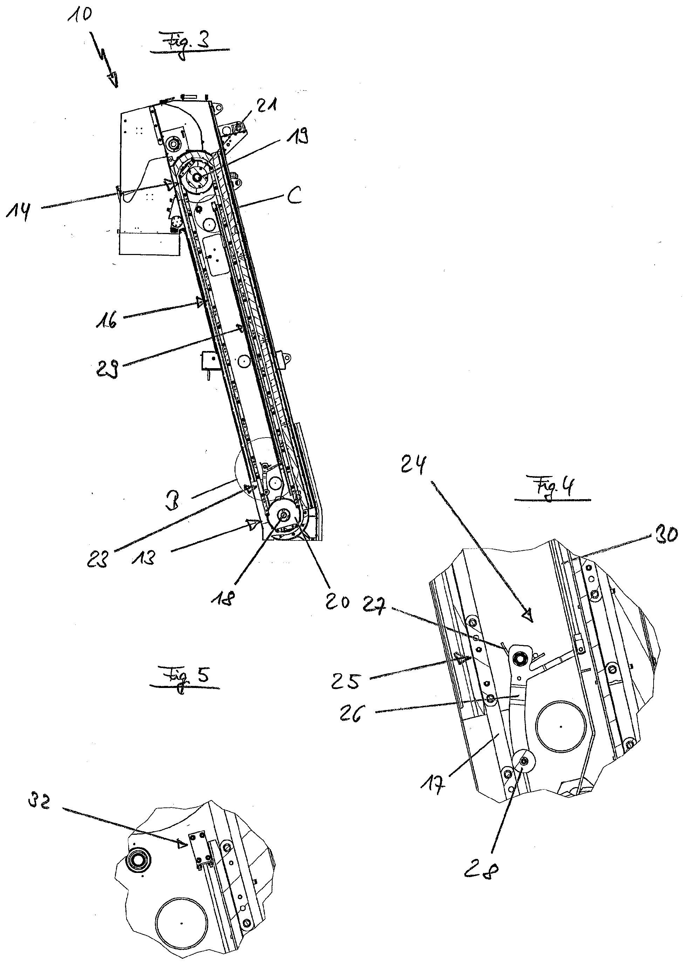

Eine Zusammenschau der Fig. 1 bis 5 zeigt eine Förderband-Filtervorrichtung 10 zur mechanischen Reinigung einer in einem hier nicht gezeigten Kanal strömenden, mit Feststoffen verunreinigten Flüssigkeit, umfassend ein endloses Filterband 11, ein Rahmengestell 12 sowie eine untere Umlenkeinrichtung 13 und eine obere Umlenkeinrichtung 14, wobei die untere Umlenkeinrichtung 13 und die obere Umlenkeinrichtung 14 an dem Rahmengestell 12 angeordnet sind, wobei das Filterband 11 über die untere Umlenkeinrichtung 13 und die obere Umlenkeinrichtung 14 geführt und längs einer an dem Rahmengestell 12 ausgebildeten Umlaufbahn bewegbar ist. Das Filterband 11 umfasst eine Mehrzahl von Filterelementen 15 und zwei Ketten, von denen hier nur eine Kette 16 ersichtlich ist, wobei die Ketten jeweils aus Kettengliedern, von denen hier nur Kettenglieder 17 der Kette 16 ersichtlich sind, zusammengesetzt sind, wobei die Filterelemente 15 jeweils zwischen einem Kettenglied 17 der Kette 16 und einem Kettenglied der anderen Kette angeordnet sind. Die untere Umlenkeinrichtung 13 und die obere Umlenkeinrichtung 14 umfasst jeweils eine Umlenkwelle 18, 19 und zwei an der Umlenkwelle 18, 19 angeordnete Kettenräder, von denen hier nur ein an der Umlenkwelle 18 angeordnetes Kettenrad 20 und ein an der Umlenkwelle 19 angeordnetes Kettenrad 21 ersichtlich sind, wobei die Ketten über die Kettenräder geführt sind. Insbesondere ist die Kette 16 über die Kettenräder 20, 21 geführt. Weiter umfasst die Förderband-Filtervorrichtung 10 eine Antriebeinrichtung 22 zum Antreiben der Umlenkwelle 19 der oberen Umlenkeinrichtung 14. Weiter umfasst die Förderband-Filtervorrichtung 10 eine hier nicht gezeigte, in einem Bereich der oberen Umlenkeinrichtung 14 angeordnete Einstelleinrichtung zum Einstellen einer Spannung und/oder des Durchhangs der Ketten. Weiter umfasst die Förderband-Filtervorrichtung 10 eine Messeinrichtung 23 mit einer Messeinheit 24 zur Messung einer Spannung und/oder eines Durchhangs der Kette 16. Dabei ist mittels der Messeinheit 23 die Spannung und/oder der Durchhang eines Leertrums 25 der Kette 16 in einem Bereich der unteren Umlenkeinrichtung 13 messbar.

Die Messeinheit 24 umfasst einen drehbar an dem Rahmengestell 12 gelagerten Hebel 26, ein Federelement 27 und zwei auf einer gemeinsamen Achse nebeneinander, an dem Hebel 26 angeordnete Rollen, von denen hier nur eine Rolle 28 ersichtlich ist, wobei der Hebel 26 mittels des Federelements 27 in Richtung der Kette 16 vorgespannt ist, derart, dass die Rollen in dem Bereich der unteren Umlenkeinrichtung 13 gegen das Leertrum 25 gedrückt werden. Weiter umfasst die Messeinheit 24 ein Gestänge 29, wobei das Gestänge 29 eine Stange 30 umfasst, wobei das Gestänge 29 bzw. die Stange 30 einerends an den Hebel 26 gekoppelt ist und das Gestänge 29 bzw. die Stange 30 andernends einen hier nicht gezeigten Zeiger aufweist, welcher zu einem Zusammenwirken mit einer hier nicht gezeigten Bereichsskala einer Anzeigeeinheit 31 der Messeinrichtung 23 zur Anzeige einer Größe der Spannung und/oder des Durchhangs eingerichtet ist, derart, dass anhand einer Position des Zeigers bezogen auf die Skala die Größe der Spannung und/oder des Durchhangs ablesbar ist. Weiter umfasst die Anzeigeeinheit 31 ein Führungsmittel 32, mittels welchem das Gestänge 29 bzw. die Stange 30 andernends führbar ist, wobei das Führungsmittel 32 als ein Kasten ausgebildet ist, wobei die Stange 30 andernends in eine hier nicht gezeigte Öffnung des Kastens eingreift. Weiter umfasst die Förderband-Filtervorrichtung 10 eine Abstreifeinrichtung 33 zum Abstreifen der Filterelemente 15.

Weiter umfasst die Förderband-Filtervorrichtung 10 eine Abwurfeinrichtung 34 zum Abwerfen eines Filterguts. Die Förderband-Filtervorrichtung 10 kann in dem Kanal angeordnet werden, derart, dass sich insbesondere die untere Umlenkeinrichtung 13 unterhalb eines Flüssigkeitsspiegels und insbesondere die obere Umlenkeinrichtung 14 oberhalb des Flüssigkeitsspiegels befindet.

## Patentansprüche

1. Förderband-Filtervorrichtung (10), insbesondere Filterbandrechen, zur mechanischen Reinigung einer in einem Kanal strömenden, mit Feststoffen verunreinigten Flüssigkeit, umfassend ein endloses Filterband (11), ein Rahmengestell (12) sowie eine untere Umlenkeinrichtung (13) und eine obere Umlenkeinrichtung (14), wobei die untere Umlenkeinrichtung und die obere Umlenkeinrichtung an dem Rahmengestell angeordnet sind, wobei das Filterband über die untere Umlenkeinrichtung und die obere Umlenkeinrichtung geführt und längs einer an dem Rahmengestell ausgebildeten Umlaufbahn bewegbar ist, wobei das Filterband zumindest ein geschlossenes Zugmittel, vorzugsweise Kette (16), und eine Mehrzahl von an dem Zugmittel angeordneten Filterelementen (15) umfasst,
**dadurch gekennzeichnet,**
**dass** die Förderband-Filtervorrichtung eine Messeinrichtung (23) mit zumindest einer Messeinheit (24) zur Messung einer Spannung und/oder eines Durchhangs des Zugmittels umfasst.

2. Förderband-Filtervorrichtung nach Anspruch 1,
**dadurch gekennzeichnet,**
**dass** mittels der Messeinheit (24) die Spannung und/oder der Durchhang eines Leertrums (25) des Zugmittels in einem Bereich der unteren Umlenkeinrichtung (13) messbar ist.

3. Förderband-Filtervorrichtung nach Anspruch 1 oder 2,
**dadurch gekennzeichnet,**
**dass** das Förderband (11) zwei Ketten (16) umfasst, welche jeweils aus Kettengliedern (17) zusammengesetzt sind, wobei die Filterelemente (15) jeweils zwischen zwei Kettengliedern der Ketten angeordnet sind.

4. Förderband-Filtervorrichtung nach einem der Ansprüche 1 bis 3, **dadurch gekennzeichnet,**
**dass** die Messeinheit (24) einen bewegbar, vorzugsweise drehbar, an dem Rahmengestell (12) gelagerten Hebel (26), zumindest ein Andruckelement, insbesondere Federelement (27) und/oder Gewichtselement, und zumindest ein an dem Hebel angeordnetes Abtastelement, insbesondere Rolle (28) und/oder Gleitkufe, umfasst, wobei der Hebel mittels des Andruckelements in Richtung des Filterbands (11) gedrückt ist, derart, dass das Abtastelement gegen das Zugmittel und/oder die Filterelemente (15) gedrückt ist.

5. Förderband-Filtervorrichtung nach Anspruch 4,
**dadurch gekennzeichnet,**
**dass** die Messeinheit (24) ein Gestänge (29) umfasst, welches an den Hebel (26) gekoppelt ist.

6. Förderband-Filtervorrichtung nach einem der Ansprüche 1 bis 3, **dadurch gekennzeichnet,**
**dass** die Messeinheit (24) zumindest einen Sensor, vorzugsweise Näherungssensor, umfasst.

7. Förderband-Filtervorrichtung nach einem der vorangehenden Ansprüche,
**dadurch gekennzeichnet,**
**dass** die Messeinrichtung (23) eine Anzeigeeinheit (31) zur Anzeige einer Größe der Spannung und/oder des Durchhangs umfasst.

8. Förderband-Filtervorrichtung zumindest nach Anspruch 5 und 7,
**dadurch gekennzeichnet,**
**dass** das Gestänge (29) mit einem ersten Ende des Gestänges an den Hebel (26) gekoppelt ist und ein zweites Ende des Gestänges einen Zeiger aufweist, welcher zu einem Zusammenwirken mit einer Skala der Anzeigeeinheit (31), insbesondere Bereichsskala, eingerichtet ist, derart, dass anhand einer Position des Zeigers bezogen auf die Skala die Größe der Spannung und/oder des Durchhangs ablesbar ist.

9. Förderband-Filtervorrichtung zumindest nach Anspruch 5 und 7,
**dadurch gekennzeichnet,**
**dass** das Gestänge (29) mit einem ersten Ende des Gestänges an den Hebel (26) gekoppelt ist, wobei das Gestänge ein zweites Ende aufweist, wobei die Anzeigeeinheit (31) zumindest einen Sensor umfasst, mittels welchem eine Position des zweiten Endes erfassbar ist.

10. Förderband-Filtervorrichtung nach einem der vorangehenden Ansprüche,
**dadurch gekennzeichnet,**
**dass** die Förderband-Filtervorrichtung (10) eine, vorzugsweise in einem Bereich der oberen Umlenkeinrichtung (14), angeordnete Einstelleinrichtung zum Einstellen der Spannung und/oder des Durchhangs umfasst.

11. Förderband-Filtervorrichtung nach einem der vorangehenden Ansprüche,
**dadurch gekennzeichnet,**
**dass** die Förderband-Filtervorrichtung (10) eine Antriebeinrichtung (22) zum Antreiben einer Umlenkwelle (19) der oberen Umlenkeinrichtung (14) umfasst.

12. Verfahren zur Einstellung einer Spannung und/oder eines Durchhangs zumindest eines geschlossenen Zugmittels, vorzugsweise Kette (16), eines endlosen Filterbands (11) einer Förderband-Filtervorrichtung (10), insbesondere Filterbandrechen, zur mechanischen Reinigung einer in einem Kanal strömenden, mit Feststoffen verunreinigten Flüssigkeit, mittels einer Einstelleinrichtung der Förderband-Filtervorrichtung, wobei das Filterband über eine untere Umlenkeinrichtung (13) der Förderband-Filtervorrichtung und eine obere Umlenkeinrichtung (14) der Förderband-Filtervorrichtung geführt und längs einer an einem Rahmengestell (12) der Förderband-Filtervorrichtung ausgebildeten Umlaufbahn bewegbar ist, wobei die untere Umlenkeinrichtung und die obere Umlenkeinrichtung an dem Rahmengestell angeordnet sind, wobei das Filterband eine Mehrzahl von an dem Zugmittel angeordneten Filterelementen (15) umfasst, **dadurch gekennzeichnet,**
**dass** die Spannung und/oder der Durchhang mittels zumindest einer Messeinheit (24) einer Messeinrichtung (23) der Förderband-Filtervorrichtung gemessen wird.

13. Verfahren nach Anspruch 12,
**dadurch gekennzeichnet,**
**dass** die Spannung und/oder der Durchhang bei einem Stillstand der Förderband-Filtervorrichtung (10) eingestellt wird.

14. Verfahren nach Anspruch 12 oder 13,
**dadurch gekennzeichnet,**
**dass** die Spannung und/oder der Durchhang bei einem Stillstand der Förderband-Filtervorrichtung (10) gemessen wird.

15. Verfahren nach einem der Ansprüche 12 bis 14,
**dadurch gekennzeichnet,**
**dass** die Spannung und/oder der Durchhang bei einem Betrieb der Förderband-Filtervorrichtung (10) gemessen wird.

16. Verfahren nach einem der Ansprüche 12 bis 15,
**dadurch gekennzeichnet,**
**dass** die Einstellung derart erfolgt, dass die Spannung und/oder der Durchhang auch angesichts von durch einen Polygoneffekt bedingten Schwankungen der Spannung und/oder des Durchhangs bei einem Betrieb der Förderband-Filtervorrichtung (10) vollständig innerhalb eines Sollbereichs liegt.
